# EUROPEAN PATENT SPECIFICATION

(11) **EP 4 375 911 B1**
(45) Date of publication and mention of the grant of the patent: **02.07.2025**
(21) Application number: 23213821.4
(22) Date of filing: 10.07.2015
(51) Int. Cl.: G06Q 20/36, G06Q 20/38, G06Q 30/0226

(54) **DISTRIBUTED LEDGER PROTOCOL TO INCENTIVIZE TRANSACTIONAL AND NON-TRANSACTIONAL COMMERCE**
VERTEILTES LEDGER-PROTOKOLL ZUM ANREIZ FÜR TRANSAKTIONALEN UND NICHTTRANSAKTIONALEN HANDEL
PROTOCOLE DE REGISTRE DISTRIBUÉ INCITANT AU COMMERCE TRANSACTIONNEL ET NON TRANSACTIONNE

(30) Priority: 11.07.2014 US 201462023568 P
(43) Date of publication of application: 29.05.2024
(62) Divisional of application: 15819505.7
(73) Proprietor: Loyyal Holdings Incorporated, Dubai (AE)
(72) Inventor: SIMON, Gregory, Beaufort, NC 28516 (US); DENNIS, Sean, San Juan del Sur Rivas Ri (NI); BARKER, Levi, Riopon, CA 9536 (US)
(74) Representative: FRKelly

(56) References cited:
- US-A1- 2002 147 641
- US-A1- 2003 065 561
- US-A1- 2004 131 997
- US-A1- 2012 035 990

## Description

### FIELD OF THE TECHNOLOGY

The present disclosure relates to incentive protocol systems and methods for implementing incentive programs. More specifically, the present disclosure relates to incentive protocol systems and methods thereof that incorporate distributed ledger protocols, which may include block chain technologies, to incentivize transactional and non-transactional behaviors.

### BACKGROUND

Incentive programs reward customers in commerce transactions and build consumer loyalty. For example, credit card companies typically offer reward programs in which cardholders receive a reward unit based on a certain percentage of business they transact with the card of the credit card company. The reward units may be miles or other types of point schemes wherein the rewards may be used to purchase or reduce the price of another good or service.
US 2004/131997A1 dicloses an automated identification, weight measurement and data reporting system that allows users to have their weight measured at a remote location and sent electronically to a data center. The system can use biometric identification technology to confirm the identity of the user at the time of the measurement of the user's weight. The user's body weight may be measured via an electronic scale connected to the biometric identification device. The measurement data is then sent via a network (such as the Internet) to a central database. This secure weight measurement data is then used to offer incentives to individuals to lose weight. The more weight an individual loses, the larger the earned incentives. The system also includes programs to measure health functions and to provide incentives to improve their health including body fat reduction, quitting smoking, reducing their blood pressure, or other health function.
US 2003/065561 discloses a method, system, and program for providing consumer healthy habits incentives. A consumable item, consumed by an individual, is detected. A health factor is detected for the consumable item. An electronic incentive is selected for the individual according to the health factor, such that the individual is encouraged to consume a healthy selection of consumable items. An electronic incentive may be further specified according to the personal health history, exercise history and consumption history of an individual.
US 2002/147641 discloses a method and system for rewarding behavior beneficial to health.
US 2012/035990 discloses a system and method for monitoring application installations, a reference to download an application is transmitted to a client device. Communication between the client device and an application server providing the application downloadable by the client device is facilitated. Execution of the application by the client device is detected, and a determination of the installation history of the application on the client device is performed. Reward data is associated with the client device for a first installation of the application on the client device.

### BRIEF DESCRIPTION OF THE DRAWINGS

The novel features of the described embodiments are set forth with particularity in the appended claims. The described embodiments, however, both as to organization and manner of operation, may be best understood by reference to the following description, taken in conjunction with the accompanying drawings in which:
FIG. 1 schematically illustrates aspects of an incentive protocol system according to various embodiments described herein;
FIG. 2 schematically illustrates aspects of an incentive protocol system comprising an incentive platform and incentive protocol network according to various embodiments described herein;
FIG. 3 schematically illustrates aspects of an incentive protocol system comprising an incentives platform including an incentive transaction communication module, transaction module, and an incentive distribution module according to various embodiments described herein;
FIG. 4A schematically illustrates aspects of an incentive protocol system comprising a block schedule wherein new tokens may be created for incentive distribution within block times according to various embodiments described herein;
FIG. 4B schematically illustrates aspects of an incentive protocol system comprising a block schedule wherein new tokens may be created for incentive distribution within block times according to various embodiments described herein;
FIG. 5A schematically illustrates aspects of an incentive protocol system comprising a white-label service and a mint modification module according to various embodiments described herein;
FIG. 5B schematically illustrates aspects of an incentive protocol system comprising a liquidation module and a mint modification module according to various embodiments described herein;
FIG. 6 schematically illustrates features of a direct participant to product or service such as manufacturer to consumer value transfer mechanism of an incentive protocol system according to various embodiments described herein;
FIG. 7 schematically illustrates a scanning operation of an incentive protocol system including a direct participant to product or service such as manufacturer to consumer value transfer mechanism according to various embodiments described herein; and
FIG. 8 schematically illustrates a distributed ledger protocol of an incentive protocol system including a direct participant to product or service such as manufacturer to consumer value transfer mechanism including a transfer resource according to various embodiments described herein.

### SUMMARY

In one aspect, a method to incentivize commerce comprises associating a digital wallet with a product or service. The wallet may include one or more private keys having an associated amount of tokens. A party may receive the wallet as an incentive for a behavior related to the product or service. The behavior may be one or more behaviors selected from shipping, transporting, storing, promoting, selling, performing, receiving, or purchasing.

In one embodiment, a purchaser of the product or service receives the wallet as an incentive to purchase the product or service. In one embodiment, the method further comprises associating the private keys with the wallet or transferring the wallet and one or more private keys to the purchaser of the product or service. The wallet may be addressable by a participant that does not have physical possession of the product to modify the amount of tokens. In one instance, the participant may be a manufacturer of the product. The product may be offered for sale at a location of a seller of the product when the amount of tokens is modified. The method may further comprise providing an addressable link. The addressable link may link to a transfer resource operable to increase or decrease the amount of tokens. The method may further comprise providing the transfer resource. The digital wallet may be remotely addressable to increase or decrease the amount of tokens prior to purchase of the product or service. The wallet may be remotely addressable to view data comprising one or more of an expiration date associated with the product, a current or projected stock condition of the product, a current or projected availability of the service, or a count of instances the wallet has been scanned to query information related to the product, service, or amount of tokens. The method may further comprise affixing a code to a surface of the product or product packaging. The code may include a scannable broadcast using a smart phone running an incentive protocol application to view the amount of tokens. The code may be entered into a webpage to view the amount of tokens. The code may comprises a QR code; a snap tag; a 2d mobile barcode; a hologram; a watermark; an invisible printed element; an invisible image; a graphic element; a series of sound tones; or a series of letters and numbers.

In another aspect, an incentive protocol system comprises an incentive protocol network comprising a distributed ledger; a digital wallet associated with a product or service, wherein the wallet includes one or more private keys having an associated amount of tokens; and a transfer resource. The transfer resource may be accessible by a first party that is not in possession of the product or service to change the amount of tokens. A second party may receive the wallet as an incentive for a behavior related to the product or service. The behavior may include at least one of shipping, transporting, storing, promoting, selling, performing, receiving, or purchasing.

The system may further comprise an addressable link to link the first party to the transfer resource operable to increase or decrease the amount of tokens. The wallet may be remotely addressable by the first party via the transfer resource to view data comprising one or more of an expiration date associated with the product, a current or projected stock condition of the product, a current or projected availability of the service, or a count of instances the wallet has been scanned to query information related to the product, service, or amount of tokens. The wallet may include a code affixed to a surface of the product or packaging of the product. The code may include a scannable broadcast using a smart phone running an incentive protocol application to view the amount of tokens. The code may be enterable into a webpage to view the amount of tokens. The code may comprise a QR code; a snap tag; a 2d mobile barcode; a hologram; a watermark; an invisible printed element; an invisible image; a graphic element; a series of sound tones; or a series of letters and numbers.

### DESCRIPTION

Incentive programs may include reward programs, loyalty programs, coupons, gift cards, or other incentives to incentivize commerce behavior. Conventional incentive programs often lack flexibility with respect to activities in which program rewards or value may be available as well as how and where the value may be realized. This inflexibility may work to reduce the value of the incentive. The present disclosure describes an incentive protocol system and methods and systems to implement incentive programs that incorporate an incentive protocol network comprising a distributed ledger/block chain.

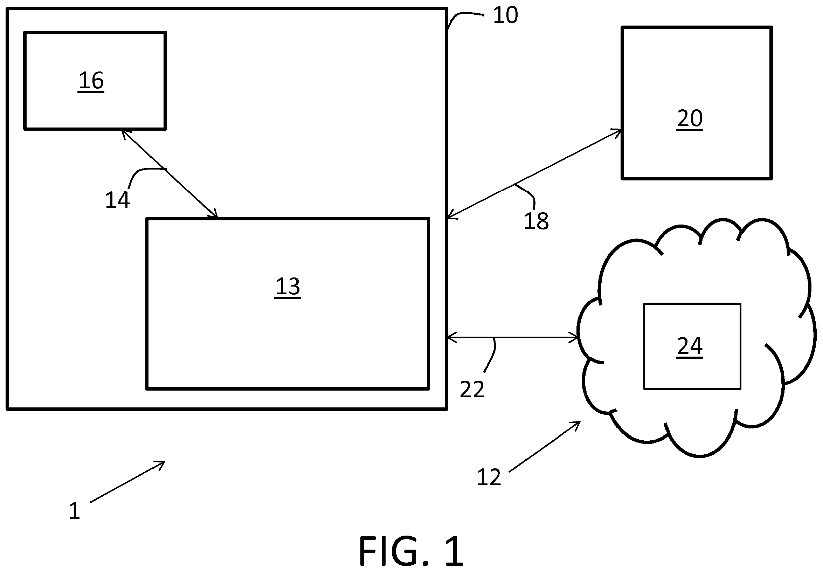

Various aspects of an incentive protocol system 1 incorporating an incentive protocol network 12 according to various embodiments are schematically illustrated in FIGS. 1-8 wherein like features are similarly identified. The descriptions provided with respect to like features may be applicable to the like features in any of the drawings and are not intended to be exclusive unless otherwise stated or inconsistent. The incentive protocol system 1 may include platforms, resources, or services that may be used to implement the system 1. For example, the incentive protocol system 1 may include an incentive protocol platform 10. The incentive protocol system 1 may further include an incentive protocol network 12 that may include various elements configured to effectuate the operations and results of the incentive protocol system 1 described herein.

The incentive protocol network 12 of the incentive protocol system 1 may provide a source or mechanism of value to incentivize transactional and non-transactional behaviors 16. The value may then be distributed to participants according to the parameters/rules of the system 1. For example, the value may be distributed to participants according to a value attributed to a transactional or non-transactional behavior event 16. In some embodiments, system rules may be defined by a first participant desiring to incentivize a particular behavior of a second participant. In various embodiments, the value may be distributed according to the behavior value with respect to commerce, such as ecommerce or non-ecommerce, in which a participant behavior includes transactions or according to a specified incentive amount attributed or assigned to a particular transaction by the system 1, which in some embodiments may be set or defined by another participant, such as the first participant desiring to incentivize the particular transactional or non-transactional behavior. In one example, a first participant may desire to incentivize particular non-transactional behaviors performed by one or more second participants, such as carpooling or reaching a particular goal set by the first or second participant or another participant. For instance, a participant employer, health insurer, or healthcare provider may desire to incentivize healthy activities from other participant employees, insured, or patients such as jogging, attending a gym, obtaining a particular weight, blood pressure, sleep period, etc. to reduce operating costs. System rules used to determine an incentive unit or value attributed to the behavior may be specified by the type of non-transactional behavior or the degree in which the behavior was performed. The incentive unit or value may be associated, e.g., attached physically or digitally, to a product or service to incentivize behaviors of participants with respect to the product or service.

In various embodiments, the incentive protocol system 1 may provide a flexible and broadly applicable incentive unit of value that may be saved, invested, spent, traded, or exchanged for value such as for currencies, coins, tokens, rewards, fiat currencies, products, discounts, options, services or any other activity in which value may be exchanged, transferred, hedged, or used.

The incentive protocol system 1 may include distribution of incentive units to protocol participants such as buyers and sellers of economic goods or services or even charities in connection with offline or online commerce including ecommerce, exchange, and fiat money transaction platforms of economic goods. In one embodiment, the incentive protocol system 1 may be used in connection with multiple ecommerce transaction platforms or in standard commerce transactions whether online or offline. The incentive protocol system 1 may also include distribution of incentive units to participants as an incentive for non-transactional behaviors, e.g., using a product or service, identifying a product or service on social media, or other activity in which a participant desires to reward another participant. Accordingly, the incentive protocol system 1 may include various combinations of incentive programs and subprograms such as reward programs, loyalty programs, coupons, and gift card programs.

The incentive protocol network 12 may include a distributed ledger design. The distributed ledger design may be an open source, public, consensus, proof-of-work, proof-of-stake, permissioned consensus, etc. ledger design. The distributed ledger design may comprise or be operable in incentive protocol network 12. The incentive protocol system 1 may include an incentive protocol platform 10 to implement the incentive protocol network 12, which may include a distributed ledger/block chain 24, such that incentive units of the system 1, which may be represented by tokens (coins, etc.), may be created, defined, verified, or distributed to incentivize, e.g., reward or credit, participant behaviors including transactional behaviors, non-transactional behaviors, or both. The incentive protocol system 1 may thereby provide a platform 12 from which one or more incentive programs, such as reward, loyalty, coupon, gift card, or combinations thereof, may operate. As used herein, incentive programs may include coupons, gift cards, reward, and loyalty programs that reward or incentivize transactional behaviors, non-transactional behaviors, or a combination thereof. Gift card and coupon programs may include branded or manufacturer cards or coupons and may be virtual, digital, or physical, e.g., represented by a card.

In various embodiments, the incentive protocol system 1 includes an incentive protocol network 12 including a distributed ledger/block chain 24 in which incentive transactional data, e.g., transaction of incentive units, associated with the incentive protocol system 1 is provided. The incentive protocol network 12 may include a virtual currency network such as a peer-to-peer, distributed, or decentralized network. It will be appreciated that virtual currency network may not require that the virtual currency generated in such network be a classified as a regulated currency. Rather incentive units that include virtual currency may be a reward, coupon, gift card, or other exchangeable value unit that may not be classified as a regulated currency.

In various embodiments, the distributed ledger/block chain 24 may incorporate a block chain, however, in some embodiments, the distributed ledger/block chain 24 may not necessarily include a block chain. For example, the distributed ledger/block chain 24 may include a distributed ledger distinct from a block chain or no block chain at all. The mechanics of some non-block chain embodiments of the distributed ledger/block chain 24 may operate similar to Ripple, Steller, or a Permissioned Distributed Ledger. For example, the distributed ledger/block chain 24 may be updated in real-time as incentive transactions occur. Such non-block chain aspects may lack miners, and nodes may custodian the ledger. Such distributed ledger nodes may be referred to as nodes and gateways. In various embodiments, the distributed ledger/block chain 24 includes its own independent block chain. However, in at least one embodiment, the distributed ledger/block chain 24 may not include its own independent block chain but rather may be associated with a block chain along with one or more cryptocurrencies. The distributed ledger/block chain 24 may, for example, include altcoins, metacoins, or utilize merged mining to leverage existing mining actives. For example, the distributed ledger/block chain 24 may include cryptographically secured tokens of value/data associated with a block chain or block chain layer. The distributed ledger/block chain 24 may also include incentive units comprising cryptographically secured tokens of value/data hashed into a block chain inside of a payload of a transaction in the underlying virtual currency, which may be the native currency of the block chain. For example, various aspects of the distributed ledger/block chain 24 of the incentive protocol network 12 may include a metacoin. Mastercoin is one example of a metacoin according to one non-limiting embodiment. A Mastercoin may contain data/currency value of any size that is hashed into the block chain of another virtual currency, e.g., Bitcoin, as one satoshi of value. In one embodiment, the distributed ledger/block chain 24 may include a permissioned distributed ledger wherein the ledger is updated in real-time as transactions occur. In various embodiment, the incentive protocol network 12 may comprise a distributed ledger/block chain 24 comprising an Internet of Things (IoT).

In various embodiments, any or multiple virtual currencies may be used with the incentive protocol system 1 as units of value, either alone or within a token layer, such as Bitcoins, Altcoins, Metacoins, Ripple, Stellar, Ethereum, internet of things, etc. Accordingly, in one embodiment, the incentive protocol system 1 may include a unit of value that may be flexible with respect to where, when, and with whom the value may be realized. In any of the various embodiments described herein, the incentive protocol system 1 may comprise an incentive protocol network 12 comprising a distributed ledger/block chain 24 wherein the native distributed ledger/block chain token or secondary layer token (white-label/branded token) may function as a coalition incentive program, such as a reward program reward/token of value. For example, in various embodiments, an incentive unit of value received as an incentive for transactional or non-transactional behavior event 16 within the system 1 may be used anywhere, with any party or outlet agreeing to accept or recognize the value. In some embodiments, the incentive protocol platform 10 or the incentive protocol network 12 may be used to control, modify, or monitor use of incentive units, which may include tokens or additional incentives or value associated with, e.g., tied or attached to, layered on, etc., the token created, defined, verified, credited, or distributed using the distributed ledger/block chain 24 of the incentive protocol network 12.

The incentive protocol system 1 may include creation of value or minting that may be decentralized or centralized, in whole or in-part. The incentive protocol system 1 may employ incentive units of value comprising tokens. The tokens may include an open source virtual currency as the source of value or the mechanism to store or transfer the unit of value being awarded or attributed to a participant according the system rules of the incentive protocol system 1. As introduced above, the incentive unit tokens may be native or non-native tokens with respect to the distributed ledger/block chain 24. For example, tokens may include virtual currencies that integrate, or incorporate digital currency units, e.g., Bitcoin, Metacoin, Appcoin, Token, etc. and that may incorporate cryptography as a mechanism to secure units of value or transactions. Cryptography and other mechanisms may also be incorporated with respect to minting of new incentive units or creation of value, e.g., via mining, proof-of-stake, proof-of-work, consensus, permissioned consensus, or other suitable protocol scheme, which may be performed by a community of users, stakeholders, participants, or combination thereof. In one embodiment, mining may be performed by a defined group or restricted to a group of miners. In another embodiment, there are no restrictions designating who can be a miner. Notably, while the token may be digital/virtual, the token or incentive unit associated with the token may be embodied, identified, defined, or represented on a physical object or ledger. Minting of new incentive unit tokens may include a multiple-signature model. For example, multiple participants such as a buyer and seller may each have a key and an administrator, community representative, or a trusted third party may have a key. Multiple, but not all keys, may be required to sign for mint authorizations. For example, only two of three keys may be needed to sign for the authorization to mint incentive tokens to be broadcast to the distributed ledger/block chain 24 of the incentive protocol network 12. Thus, two of three participants or other combinations of participants, such as three of five, may be required to authorize minting of tokens. Hence, these participants may authorize the minting of the incentive unit tokens but may not be generating or performing the actual minting. Rather, the minting may be performed by the incentive protocol network 12 including the distributed ledger/block chain 24.

The incentive protocol system 1 may also include or interface with digital wallets. The digital wallet 20 may comprise a digital or virtual currency wallet of participant of the incentive protocol system 1. In various embodiments, the incentive protocol platform 10 may perform post distribution management operations, e.g., with a management module, with respect to subsequent transactions involving the incentive unit, e.g., the incentive protocol platform 10 may perform program management such as co-signing operations. The subsequent transactions may be with another participant of the incentive protocol system 1 or a third-party. Upon receiving subsequent transaction event data related to the use or proposed use of an incentive unit, the incentive protocol platform 10 may generate an incentive unit transaction and broadcast 22 the transaction to the incentive protocol network 12 for inclusion in the distributed ledger/block chain 24. In some embodiments, however, the incentive protocol platform 10 does not perform program management operations. In some such embodiments, the wallet 20 or a third party may perform the program management operations. As introduced above, an incentive unit may include additional incentive unit data associated with the token. In some such embodiments, the incentive protocol platform 10, or a management module thereof, may be configured to receive or request from participants, system platforms, or distributed ledger protocol transactions in which such incentive units have been used to perform additional accounting or administrative incentive protocol system operations, such as balancing incentive units with respect to participants, updating system rules, or updating participant accounts.

As introduced above, the distributed ledger protocol 10 may be employed as a mechanism to store or transfer units of value. In various embodiments, the incentive protocol system 1 may be configured for robust and flexible application. For example, in addition to system rules for incentivizing behaviors 16 on ecommerce platforms, the incentive protocol system 1 may also include system rules that may be employed to provide a mechanism to store or transfer units of value in connection with other transactional event behaviors 16, such as in connection with brick and mortar sales and services, a credit/debit card point of sale system, a digital currency 2.0 point of sale system such as "Coin Kite / Bit Pay", etc. The incentive protocol system 1 may also include system rules for distribution of tokens as a reward to incentivize participant behavior events 16 that are non-transactional, e.g., using a product or service, identifying a product or service on social media, taking a survey, obtaining a non-transactional goal such as attending a participant or non-participant gym, losing an amount of weight, or other goal or activity in which a participant desires to reward another participant. For instance, a participant employer, health insurer, or healthcare provider may desire to incentivize healthy activities from other participant employees, insured, or patients such as jogging, attending a gym, obtaining a particular weight, blood pressure, sleep period, etc. to reduce operating costs.

In various embodiments, participants of the incentive protocol system 1 may be provided with an account. Various categories or levels of accounts may be used. The account categories or levels, for example, may be associated with different classes of participants such as merchants, sellers, distributers, promoters, exchangers, brokers, buyers, members, clientele, prospect, employer, employee, patient, caregiver, provider, insured, insurer, etc. and may provide the participant with functionalities specific to their class. Accounts may also be associated with a digital wallet 20 configured to store or maintain accounts including, for example, keys, addresses, coupons, gift cards, etc. associated with the tokens or other incentive units held by an account holder. For example, wallets 22 may include software programs, mobile or web applications, etc. configured to run on an user electronic device such as a computer, tablet, smart phone, etc. Wallets 22 may be configured to assist in executing protocol transactions or functions and may include records or presentation of value in the wallet or store private keys.

In various embodiments, for example, the incentive protocol system 1 includes a server coupled with a data storage medium (e.g., hard disk, solid state storage, etc.) and a logic control unit that may include a data storage controller. The server may include a communication module configured to transmit and receive incentive protocol system data. The data storage medium may also store incentive protocol system 1 incentive transaction data as well as user account data, for example. The logic control unit, such as an electronic data or computer processor, e.g., central processing unit, may be configured execute instructions stored in the data storage medium that when executed perform the functionalities and operations of the incentive protocol system 1. For example, the incentive protocol system 1 may comprise a set of instructions which may include software, protocols, and the like, stored in a data storage medium that when executed perform the herein described operations of the incentive protocol system 1. Accordingly, the server, data storage medium, logic control unit, and communication modules may be configured to receive, transmit, communicate, process, modify, maintain, provide or prevent access, distribute, delete, etc. incentive data, e.g., incentive transaction data, system rules/parameters, transactional, non-transactional events, etc., according to the incentive protocol system 1.

With particular reference to FIG. 1, schematically illustrating aspects of the incentive protocol system 1 according to various embodiments, the incentive protocol system 1 may include an incentive protocol platform 10 and an incentive module 13. The incentive protocol platform 10 may comprise a proprietary, non-proprietary platform, or platform comprising interfacing proprietary platforms, non-proprietary platforms, or combinations thereof. The incentive module 13 may be configured to receive incentive event data 14 associated with a participant behavior event 16. The participant behavior event 16 may be an incentivizable event of the incentive protocol system 1 that may include a transactional behavior, non-transactional behavior, or combination thereof. The incentive module 13 may be configured to generate an incentive unit transaction based on the incentive event data 14. For example, the incentive module 13 may be configured to analyze the incentive event data 14 and apply incentive protocol system rules to determine the type or amount of incentive unit to be distributed for the subject behavior event 16 of the participant. In some instances, distribution may include deductions as well as credits or additions to an account of a participant of the incentive protocol system 1. Thus a distribution, in some embodiments, may result in an increase, decrease, or combination thereof in one or more participant accounts. The incentive units may be associated with one or more incentive programs such as reward programs, loyalty programs, gift cards, coupon programs, or combinations thereof. The incentive protocol platform 10 may use the incentive event data 14 to perform an incentive unit transaction to calculate an incentive unit due to one or more of the participants. The incentive unit due may be determined by the analysis of the incentive module 13, which may include applying the incentive protocol system rules. The incentive module 13 may be further configured to broadcast incentive unit transaction data 22 to an incentive protocol network 12 for incorporation into a distributed ledger/block chain 24, e.g., to provide verification or confirmation of the transaction. As introduced above, the incentive protocol network 12 may include a distributed ledger protocol such as a distributed ledger or a block chain technology, collectively referred to herein as distributed ledger/block chain 24. As also introduce above, the distributed ledger/block chain 24 may include a native or non-native virtual currency or token.

The incentive protocol platform 10 or incentive module 13 may be further configured to distribute 18 the incentive unit to or from participants, which may include merchants, sellers, distributers, promoters, exchangers, brokers, buyers, members, clientele, prospect, employer, employee, patient, caregiver, provider, insured, insurer, etc. The incentive module 13 of the incentive protocol platform 10 may not necessarily send incentive units to the wallets 20 when distributing 18 but rather may broadcast 22 the incentive transaction data 22 to the incentive protocol network 12 for inclusion in the distributed ledger/block chain 24 to confirm the incentive unit transaction. Distribution 18 may include a data communication with a wallet 20 that transmits incentive data associated with the incentive unit transaction to the wallet 20, such as keys, addresses, or other data associated with an incentive unit transaction or transaction data, e.g., type, amount, value of incentive unit or terms, conditions, or restrictions associated with the incentive unit. For example, the incentive data may comprise specification of an incentive unit including an amount or value of tokens, which may be native, non-native, or white-label tokens. The distribution 18 of the incentive unit may therefore include delivery or exchange of incentive unit transaction data, such as exchange between the incentive protocol platform 10 and wallet 20 of crypto transaction data associated with the incentive unit such as private keys or addresses to effectuate the incentive unit distribution. The incentive unit may also include additional incentive data associated with the token, such as branding or white-labeling attached to or layered on tokens.

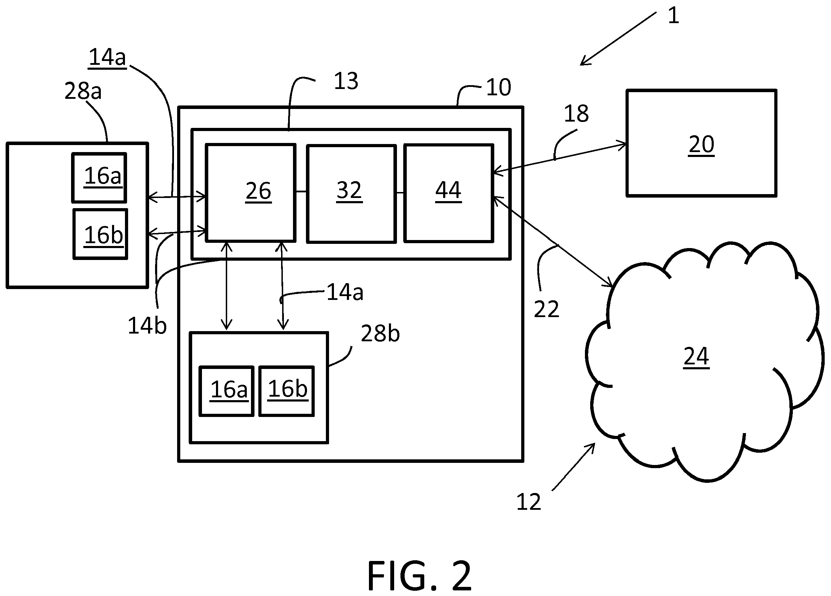

FIG. 2 schematically illustrates a further embodiment of the incentive protocol system 1 according to various embodiments. The incentive protocol platform 10 comprises an incentive transaction communication module 26, an incentive transaction module 32, and a distribution module 44. The incentive transaction communication module 26 is configured for electronic communication (e.g., wired, wireless, telecommunication, internet, intranet, extranet via Wi-Fi or Wireless Wide Area Networks etc.). The incentive transaction communication module 26 may be configured to receive incentive event data comprising one or both of participant transaction event data 14a or participant non-transaction event data 14b. The incentive transaction communication module 26 may receive the participant transaction or non-transaction event data 14a, 14b from a commerce platform, which may be a third-party commerce platform 28a or a commerce platform 28b built into or incorporated into the incentive protocol platform 10, any of which may include one or more online, offline, ecommerce, or non-ecommerce platforms. For example, in one embodiment, the incentive transaction communication module 26 may be configured to interface with, e.g., via one or more plug-ins, one or more commerce platforms 28a, 28b to receive participant transaction or non-transaction event data 14a, 14b. In this or another embodiment, the incentive transaction communication module 26 may also be configured to transmit queries requesting participant transactional or non-transactional event data 14a, 14b. While only a single third party commerce platform 28a and incorporated commerce platform 28b are illustrated in FIG. 2, the system 1 may include fewer or additional commerce platforms 28a, 28b, each of which may be associated with transactional behavior events 16a, non-transactional behavior events 16b, or combinations thereof. In various embodiments, participant transactional and non-transactional data 14a, 14 may also be transmitted to the incentive transaction communication module 26 of the incentive protocol platform 10 from commerce platforms 28a, 28b comprising individual participants or groups of participants that may transmit a code, form, picture, or other verification information, e.g., using an application running of a computer, smart phone, etc., for generation of an incentive transaction.

Commerce platforms 28a, 28b may include point of sale devices, internet based ecommerce, brick and mortar, or participant electronic devices. For example, the incentive transaction communication module 26 of the incentive module 13 may receive transactional event data 14a from point of sale devices, credit/debit card machines, participant electronic devices, or other communication device or platform. The incentive transaction communication module 26 of the incentive module 13 may also receive non-transactional event data 14b from participant electronic devices. For example, a participant may obtain incentive transactional event data 14a or incentive non-transactional event data 14b for transmission to the incentive transaction communication module 26 by scanning a receipt, a code presented or generated at the point of sale or use, a transaction code, participant ID, etc. with a participant device within a period of time or upon presentation, and transmit the transactional or non-transactional event data 14a, 14b to the incentive transaction communication module 26.

The incentive transaction module 32 may be configured to receive the incentive event data 14, which may include transactional or non-transactional event data 14a, 14b, from the incentive transaction communication module 26. The incentive transaction module 32 may be configured to generate an incentive unit transaction based on the incentive event data 14a, 14b using incentive protocol system rules to determine the type or amount of incentive unit that is to be distributed for the subject behavior 16a, 16b of the participant. The incentive distribution module 44 may be configured to receive the incentive unit transaction data from the incentive transaction module 32 and distribute 18 the incentive units to participants, e.g., a wallet 20. The distribution module 44 may also broadcast 22 the incentive transaction data 22 to the incentive protocol network 12 for inclusion in the distributed ledger/block chain 24 to confirm the incentive unit transaction comprising the incentive unit transmitted to participant wallets 22. The distribution module 44 may refer to a location where incentive unit tokens are originally "called" from the incentive protocol network 12 or distributed ledger/block chain 24 via a remote procedure call (RPC) to broadcast 22 data to the incentive protocol network 12.

Participants in the incentive protocol system 1 may be incentivized to expose or direct potential participants to the incentive protocol system 1. For example, when a merchant participant transacts with a party that is not currently a participant of the incentive protocol system 1, the merchant participant may receive a distribution 18 of an incentive from the behavior event 16, but the non-participant party to the transaction or event may not. Accordingly, the non-participant party may not receive, realize, or recognize the incentive value, and, as a result, the potential value to the non-participant may be lost. While the merchant participant may receive value such as distributed incentive units, the merchant participant may also fail to realize the additional value associated with increasing the value of the transaction or event to the non-participant through association of incentives with the merchant participant's products or services that would otherwise be available in connection with the incentive behavior event 16 if the non-participant was instead a participant in the incentive protocol system 1. Therefore, in one embodiment, the merchant participant may provide the non-participant information or scannable code/snap tags or other source containing data to provide the non-participant a link to quickly become a participant, e.g., to obtain an account and quickly download a wallet 20 to a computer or mobile device, such as a smart phone.

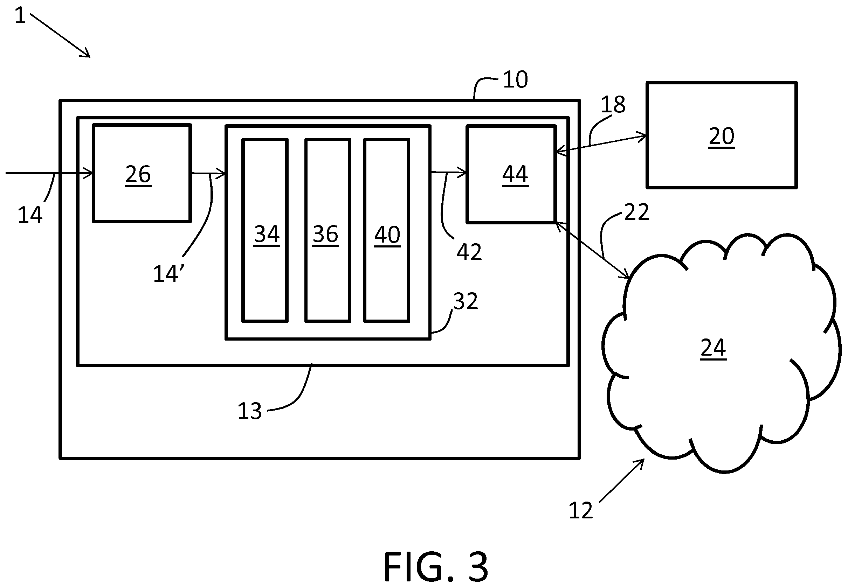

FIG. 3 schematically illustrates further aspects of the incentive protocol system 1 according to various embodiments. The incentive module 13 of the incentive protocol platform 10 may comprise an incentive transaction communication module 26, incentive transaction module 32, and incentive distribution module 44, which may be similar to that described above with respect to FIGS. 1-2. The incentive transaction module 32 may include a verification module 34 to verify incentive behavior events 16 or identify the parties to the incentive behavior event 16 that are participants. In one embodiment, the verification module 34 may associate a weight to one or more participants as described below. The incentive transaction module 32 may further include an incentive transaction repository 36 configured to store all or a portion of the incentive event data 14. The incentive transaction repository 36 may timestamp incentive event data 14. The incentive transaction module 32 may further include an incentive calculation module 40 configured to calculate an incentive unit 42, e.g., by applying system rules, to be distributed 18 to a participant, such as to a participant wallet 20 by a distribution module 44. The distribution module 44, for example, may include a wallet program to broadcast 22 transactions comprising distribution 18 of incentive units to user wallets 20 to the incentive protocol network 12 for inclusion in the distributed ledger/block chain 24.

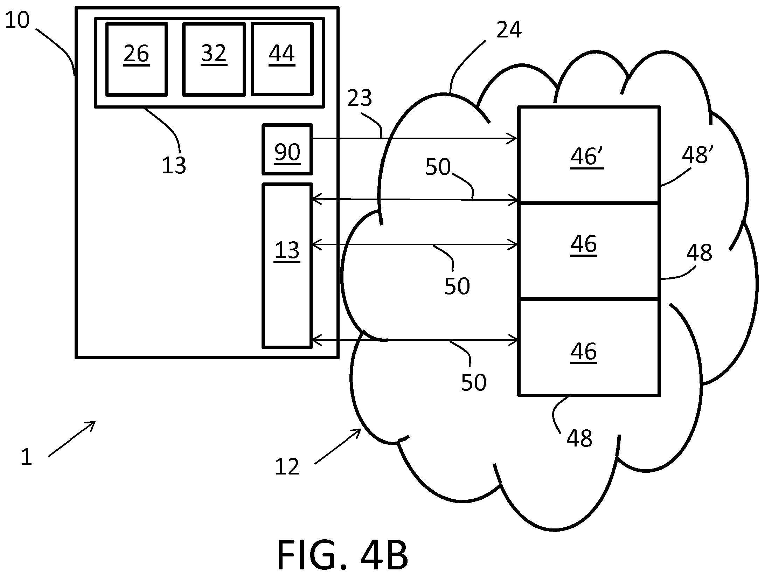

The incentive protocol system 1 may also include or operably interface with participant electronic devices, which may also include or be configured to communicate with or through a commerce platform (see FIG. 2). The participant electronic devices may include, personal computers, tablets, smart phones, smart watches, or other electronic communication device. The participant electronic devices may include scanning functions, (e.g., as described with respect to FIGS. 2 and 6-8). The participant electronic devices may include biometric feedback functions. For example, a participant electronic device may include biometric feedback device functions wherein biometric data may be obtained from the participant and transmitted to the incentive protocol platform 10 as behavior event data 14, such as non-transactional behavior event data 14b. Such data may include participant heartbeat, blood pressure, blood sugar levels, physical location, etc. These data may be input factors used in analyzing the event data 14 to verify system rules are met for issuance or to calculate the incentive unit by the incentive calculation module 40, which may be based on a value amount as provided by the system rules such as in relation a type and degree of behavior, e.g., more favorable biometric data may receive a greater incentive unit value. In various embodiments, the biometric feedback may be obtained via a wearable device such as a wristband, armband, etc. The wearable device or another device, such as a smart phone, personal computer, tablet, or transmitter may be configured to obtain the data from the wearable device and transmit the data to the incentive protocol platform 10. The incentive protocol system 1 may also include a mint modification module similar to the mint modification module 90 described below with respect to FIGS. 4B-5B. The distribution module 44 may similarly include the functionalities of the mint modification module to modify an amount of tokens created on-demand, e.g., within a block time or with respect to a permissioned ledger.

As introduced above, various embodiments of the incentive protocol system 1 may use native or non-native tokens as a reward to incentivize a transactional or non-transactional commerce. For example, the incentive protocol system 1 may be configured to issue tokens for association with a gift card program, which may include a digital gift card or wallet. In one embodiment, the tokens may comprise branded or white-labeled tokens on the distributed ledger/block chain 24. Branded or white-label tokens may differ from the native distributed ledger/block chain 24 tokens configured to operate as coalition incentives in that branded or white-label tokens may be subject to greater use limitations, e.g., the value on top of the native token value may be recognized by a limited number of participants, a particular manufacturer, or the brand issuing the token, which may be in the form of a coupon, gift card, reward program, or loyalty program. In some embodiments the white-labeled or branded tokens may be asset backed. Asset backing may be used, for example, to avoid value volatility of the token of the distributed ledger/block chain 24, e.g., distributed ledger token or native block chain token. In one example, asset backing may be provided in fiat, precious metals, commodities, etc.

The incentive protocol platform 10 or incentive protocol network 12 may employ an open assets protocol to issue or define incentive data of an incentive unit, such as brand, redemption value, expiration date, use conditions, etc. The incentive unit may be issued to a gift card, for example. In one embodiment, a gift card may be issued as a multi-signature open asset wallet 20, which may be together with or interface with the wallet 20 and may further include oversight from the incentive protocol platform 10. The wallet 20 may provide a resource employable to control, modify, or monitor use of tokens associated with the card. For example, subsequent transfer of the tokens associated with the incentive unit from the wallet 20 may be subject to oversight or restrictions. The oversight or restrictions may be provided by a program manager, which may operate as a co-signing service. In addition to enforcing uses/restrictions defined by the incentive data associated with the incentive unit, in one embodiment, the program manager may also enforce government regulations such as anti-money laundering regulations and spending limits. Thus, the program manager may not co-sign wallet transactions that may run afoul of government regulations. The program manager may be a participant, such as the issuer of the incentive unit, or may be a third party trusted by both the issuer participant and the cardholder/incentive participant recipient.

In one embodiment, a participant, which may be a merchant associated with a commerce platform 28 operating online or offline and broadcasting participant transaction or non-transaction data 14a, 14b to the incentive protocol system 1, may accept currencies such as cash money and exchange fiat money into the incentive protocol system 1 to thereby convert the currencies into incentive units or associated tokens comprising native, non-native, branded, or white-label tokens. The merchant may then receive distribution 18 of the incentive units as a merchant participating in the incentive protocol system 1. A different merchant or the same merchant operating offline may similarly accept currencies such as cash money and exchange fiat money into the incentive protocol system 1 to thereby convert the currencies into incentive units and associated tokens comprising native, non-native, branded, or white-label tokens and then receive the distribution 18 of the incentive units as a merchant participating in incentive protocol system 1.

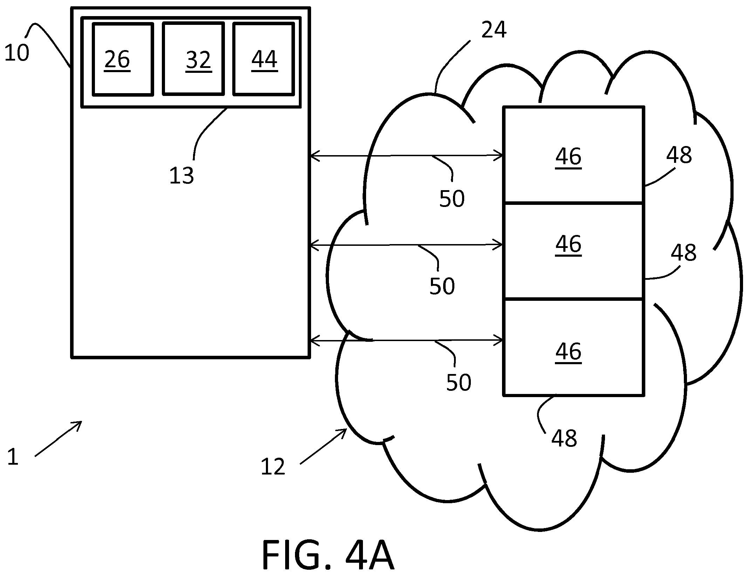

As introduced above, in various embodiments, the incentive units or tokens may be driven by or implemented through an distributed ledger protocol including open source aspects or open source characteristics. As schematically illustrated in FIG. 4A, the incentive protocol system may include an incentive protocol platform 10, which may be similar to that described above with respect to FIGS. 1-3 and an incentive protocol network 12 including a distributed ledger/block chain 24. The distributed ledger/block chain 24 may include incentive units or tokens 46 to incentivize commerce behaviors, e.g., ecommerce or non-ecommerce, offline or online transactions, or non-transactional behaviors, distributed 18 through a propriety distribution or incentive protocol platform 10. For example, incentive protocol network 12 may include an open source protocol configured to send a predetermined or fixed amount of tokens 46 to the platform 10 in each block time 48. The platform 10 may then distribute 18 those tokens 46 in incentive units according to the system rules. In this embodiment, the distributed ledger/block chain 24 includes a block schedule wherein new tokens 46 may be created within blocks or block times 48. Only three block times 48 are illustrated, however, it is to be appreciated that the block schedule may define protocol parameters including numerous sequential block times 48 over a period of days, weeks, months, or years. Each block time 48 may therefore include new tokens 46 that may be distributed 18 according to the parameters of the incentive protocol system 1 and distributed ledger protocol 10. Block times 48 may be scheduled such that broadcast 22 transactions or distribution 18 of the incentive units quickly hit incentive protocol network 12 for inclusion in the block chain. For example, in one embodiment, block times 48 may be scheduled at sixty seconds. However, system rules/protocol parameters providing different block times 48 or schedules wherein the blocks times 48 may be modified or adjusted up or down may also be used. For example, block times 48 may be statically or dynamically scheduled, e.g., using the mint modification module 90 (see FIGS. 4B-5B), at intervals, or upon occurrence of certain trigger events. The parameters of the block times 48 may be set by rule.

In one embodiment, the tokens generated, created, or assigned to each block time 48 include a pre-determined number of newly minted tokens 46. The pre-determined number of newly minted tokens 46 may be set to be the same by rule across successive blocks 48. However, in at least one embodiment, the pre-determined number of newly minted tokens 46 created in each block time 48 or block times 48 themselves may be different, e.g., increase or decrease with respect to a time of day, year, or block number. In one embodiment, the block time 48 may be set at intervals different from the block chain in which distribution of the incentives is recorded.

According to various embodiments, newly minted tokens 46 created in each block time 48 are output, credited, or sent 50 to the incentive protocol platform 10, e.g., to the distribution module 44, for distribution 18 to user wallets 20 as a reward to incentivize ecommerce, offline non-ecommerce transactions, non-transactional behaviors, or a combination thereof. The distribution module 44 may refer to a location where the tokens 46 are originally "called" from the incentive protocol network 12 via a remote procedure call (RPC) to broadcast 22 data to the incentive protocol network 12. The data broadcast 22 to the incentive protocol network 12 may then transmit the data to the distributed ledger/block chain 24 and thereby distribute 18 the tokens in incentive units to participant wallets 22. For example, newly minted tokens 46 generated with each successive block 48 of the block chain may be distributed 18 to participants through the operation of the incentive protocol platform 10 and incentive protocol network 12 such as charities, buyers, sellers, or users of economic goods or services on multiple transaction platforms, such as offline, online, or fiat money transaction platforms, as well as participants involved in non-transactional behaviors.

Various system rules may be used to direct distribution 18 of newly minted tokens 46. For example, in one embodiment, incentive units represented by a number of tokens received by each participant buyer and seller is calculated by the incentive calculation module 40 (see FIG. 3) as a weighted function of the value of their behavior event 16 or representative portion of the behavior event 16 relative to the value of the total pool of transactions 16 in the same block time 48. Transaction value may include components related to transaction type, amount, party type, e.g., transactions between participants of the incentive protocol system 1, etc. For example, 100 tokens 46 may be minted for distribution 18 in one block time 48 wherein the incentive transaction pool includes a total transaction value of two hundred. The system 1 may be configured to assign values to transactional and non-transactional behaviors. In some embodiments, multiple transaction pools are setup in each block time 48. Each transaction pool may be associated with or assigned a type of incentive behavior event 16, such as transactional, non-transactional, transactional between multiple participants, etc., in which participants involved in the type of associated behavior event 16 with the block time 48 may share in the allotted pool of tokens 46.

In one example, a participant transacting, either transactionally or non-transactionally, in the block time 48 having a value of ten may receive an incentive unit comprising five tokens distributed 18 to their wallet 20 as an incentive. In some embodiments, other distribution parameters of the system rules may be used by the incentive calculation module 40 to adjust weighting of transaction values. For example, certain participants may be conferred a higher weighting with respect to the transactions in which they participate either in their own right or for the party transacting with the participant. In a further example, the participant may be a high value target and therefore other participants may be incentivized to enter transactions with the participant to increase their incentive unit.

In another embodiment, the incentive protocol system 1 includes distributing a fixed amount of tokens 46 in each block time 48, however, the tokens 48 distributed may be incentive units including non-native, branded, or white-labeled tokens. In one embodiment, distribution 18 of the fixed amount of tokens 46 in each block time 48 may include receiving the tokens 46, broadcasting 22 the transaction data remotely to the incentive protocol network 12, and distribution 18 of the tokens 46 in an incentive unit to a participant wallet 20, which may include merchants, sellers, distributers, promoters, exchangers, brokers, buyers, members, clientele, prospect, employer, employee, patient, caregiver, provider, insured, insurer, or any entity having a wallet 20, wherein the relationship of the incentive unit distributed 18 to each participant is a weighted function of the value of the participant transaction or non-transaction behavior 16 relative to the value of the total pool of transactions in the same block time 48.

As introduced above, the incentive protocol system 1 may include system rules that govern the parameters of the incentive protocol system 1. The system rules may be related to, for example, the number of tokens 46 in each block time 48, distribution parameters, etc. The system rules may be subject to decision making schemes of the community of participants that makeup the stakeholders in the source of value derived from the incentive protocol system 1 and its units of value. The value attributed to the incentive units or tokens 46, for example, may be ensured through maintenance and community oversight by the community interested in maintaining or maximizing the value of the incentive protocol system 1 or its associated incentive units or tokens 46. For example, in one embodiment, a predetermined number of tokens to be minted in each block time 48 or total is set by system rule in an open source environment and will remain set unless a predetermined portion of the community, e.g., a majority, votes to change the rule. Thus, the community of users may form a self-governing body tied by their mutual interest in the incentive protocol system 1 or the distributed ledger protocol 10. For example, the incentive protocol system 1 may be configured such that a majority or 51% of the community/miners/nodes may decide to amend, alter, or change parameters of the distributed ledger/block chain 24, e.g., initiate a hardfork.

FIG. 4B schematically illustrates a further embodiment, wherein the incentive protocol platform comprises a mint modification module 90 configured to modify 23 the number of tokens minted at any time block-by-block. For example, the mint modification module 90 may be employed to mint incentive tokens on-demand or on a real-time basis in any quantity. The mint modification module 90 may be configured to allow modification of the minting of new tokens to be used as incentive units. For example, the mint modification module 90 may be configured to modify 23 the number of tokens 46' minted in a block time 48', which may include on-demand modification. In one embodiment, the mint modification module 90 may be used to mint any number of tokens 46' on-demand in any block regardless of which miner signed the block. The mint modification module 90 may be used to modify the type or amount of tokens minted 46' in a block time 48'. In one embodiment, the mint modification module 90 may be built into the block chain of the distributed ledger/block chain 24. The mint modification module 90 may be configured to interface with the distribution module 44 or incentive transaction module 32 such that a predetermined number of tokens 46, 46' are minted and distributed to miners in each block time 48, 48' and the number of tokens 46, 46' minted over the predetermined number tokens 46, 46' minted and distributed to the miners may be modified 23 to increase or decrease the number of tokens 46, 46' minted. In another embodiment, the modification module 90 is able to modify 23 the number of tokens 46, 46' including the predetermined number of tokens minted for distribution to miners. Access to the mint modification module 90 may be restricted, for example, to a community representative or incentive protocol system operator.

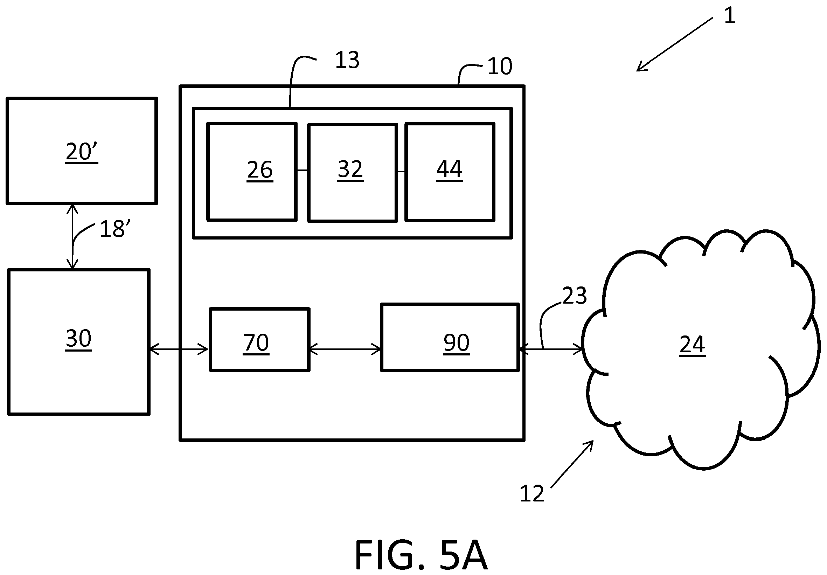

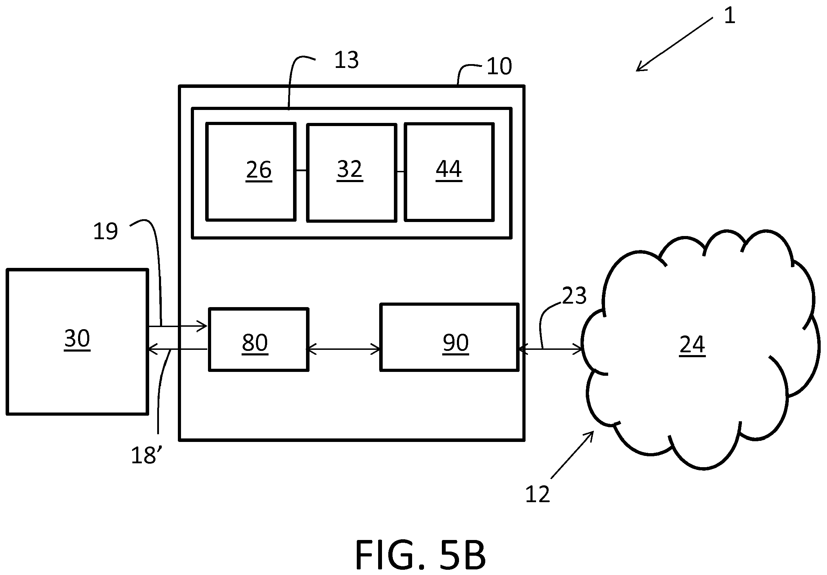

In various embodiments wherein the distributed ledger/block chain 24 employs a block chain, mining may be fully open to the public. In another embodiment, mining may be semi-closed. Miners may be paid a predetermined number of minted tokens 46, 46' in each block time 48 as compensation for mining. In another embodiment, miners may mine for free or pay to mine. In one such embodiment, mining may not be fully open to the public, but rather may be semi-closed to only parties determined to have a vested interest in securing the block chain. For example, a miner may be a party with a vested interest in securing the block chain, such as an incentive program operator with a white-labeled stand-alone program operating on the block chain. In embodiments wherein the distributed ledger/block chain 24 employs a distributed ledger that is not a block chain, e.g., a permissioned distributed ledger wherein the ledger is updated in real-time as transactions occur and may not include miners or compensation for miners, the mint modification module 90 may similarly be used to modify an amount of tokens to be minted on an on-demand or real-time basis in any quantity. Minting of new incentive tokens may include a multiple-signature module. For example, multiple participants, such as a buyer and seller, may each have a key and an administrator, community representative, or a trusted third party may have a key. Less than all, such as only two of three, keys may be needed to sign for the authorization to mint incentive tokens to be broadcast to the distributed ledger/block chain 24 of the incentive protocol network 12. Thus, two of three participants or other combinations of participants, such as three of five, may be required to authorize minting of tokens. Hence, these participants may authorize the minting of the incentive tokens but may not be generating or performing the actual minting. Rather, the minting may be performed by the incentive protocol network 12 including the distributed ledger/block chain 24. As described in more detail below with respect to FIGS. 5A and 5B, the mint modification module 90 may be used in association with a white-label service 70 or a liquidation module 80 to modify the amount of tokens 46' minted in a block time 48' or with respect to a distributed ledger.

FIG. 5A illustrates a further embodiment of the incentive protocol system 1 comprising a white-label service 70. The white-label service 70 may allow participants 30 such as incentive program operators or manufacturers to issue branded tokens on top of a coalition distributed ledger/block chain 24 as a stand-alone program. These white-label tokens may function as incentive units such as rewards, gift cards, or manufacturer coupons that may be distributed 18' to wallets 20' of system participants that are participants of the non-coalition program associated with the white-label tokens. In one embodiment, the white-label token may be indexed to an amount of native token value on the distributed ledger/block chain 24, with a label added on top. This label may contain the incentive redemption value and may be a different value than the value of the underlying native token value that it has been indexed to on the distributed ledger/block chain 24. Participants 30 may, for example, set up a white-label token as a stand-alone program to issue the white-label tokens. In various embodiments, stand-alone programs on the coalition distributed ledger/block chain 24 may interact with each other according to parameters defined by the participant 30 program operators. For example, one or two program operators can define special inter-breakage rules to do a cross promotion (Redeem McDonalds rewards at Starbucks at 80% of face value; redeem LAFitness rewards at GNC at 110% of face value for select goods, etc.). The white-label tokens can either be freely exchanged p2p like any other distributed ledger/block chain 24 token, or exchange restrictions can be included to meet unique needs of some participants 30. White-label stand-alone programs may be asset backed as introduced above, e.g., on request of the participant 30. In one embodiment, this may be accomplished by placing collateral such as fiat currency or precious metals with a third party custodian. In FIG. 5A, the white-label participant 30 is illustrated as distributing 18' the white-label token to participant wallets 20', in some embodiments, the incentive protocol platform 10 distribute 18' the white-label tokens to participant wallets 20' under the white-label service 70. The mint modification module 90 may also be used in connection with the white-label service 70 to modify 23 the amount or type of tokens minted such that tokens comprising white-label or branded tokens having the additional or layered incentive data may be generated from the distributed ledger/block chain 24.

With reference to FIG. 5B, the incentive protocol system 1 may also include a liquidation module 80. The liquidation module 80 may be operable to allow a participant 30, such as a merchant, insurer, employer, etc. to use the incentive protocol system 1 to liquidate all or a portion of a liability under a pre-existing incentive program, which may be an incentive program not previously associated with the incentive protocol system 1. For example, a participant 30 may liquidate an amount of the existing incentive liability on their balance sheet into incentive units of the incentive protocol system 1. The participant 30, which may further include a program operator of the incentive program having liability to be liquidated, may transact 19 with the incentive protocol platform 10, e.g., purchase a block of newly minted incentive units in the form of tokens. The purchase may be directly from the incentive protocol platform 10. In one embodiment, the liquidation module 80 may interface with the mint modification module 90 to modify 23 a type or amount of tokens minted or otherwise provide the purchased tokens for distribution 18' to the participant party 30, which may include a wallet. After purchasing the tokens the participant may encourage or force holders of existing incentives (to be liquidated) to exchange them for the purchased tokens, reducing or eliminating the existing incentive liability on the participant's balance sheet.

A liability liquidation using the liquidation module 80 may also be performed in conjunction with the white-label process using the white-label service 70 and the mint modification module 90 as described above with respect to FIG. 5A. For example, the tokens produced in the white-label process may be exchanged for existing program incentives to be liquidated. Depending upon the relative redemption value and asset backing, the participant's incentive liability may also be reduced. In one embodiment, tokens produced in the white-label process may be exchanged for coalition tokens of the incentive protocol system 1 for broader use.

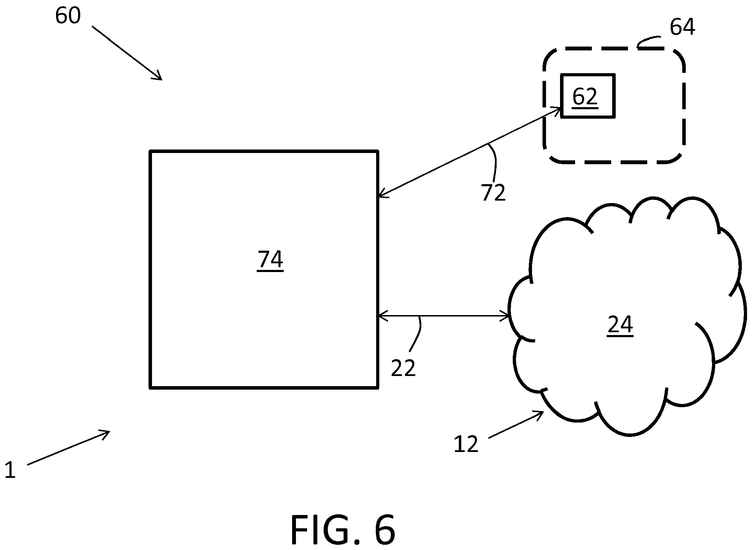

FIGS. 6-8 schematically illustrate various features of an embodiment of the incentive protocol system 1 including a direct participant to product or service, e.g., a direct manufacturer to consumer, value transfer mechanism 60, which may include dynamic transfer of value of an incentive unit. The incentive protocol system 1 may be separate from or include features similar to those described above with respect to FIGS. 1-5B. For example, the value transfer mechanism 60 or a transfer resource 76 may be incorporated into the incentive platform 10 whereby transfers may be communicated to the incentive module 13, such as to the transaction communication module 26, whereby the transaction may be processed by the incentive transaction module 31, and broadcast 22 to the distributed ledger/block chain 24 by the distribution module 44 to verify or confirm the transfer. In some embodiments, the incentive protocol system 1 includes one more of the coalition incentive or rewards program features as described above with respect to incentive protocol system 1 described above with respect to FIGS. 1-5B. The incentive protocol system 1 may similarly include other aspects such as the liquidation module 70, white-label service 80, mint modification module 90, or any combination thereof.

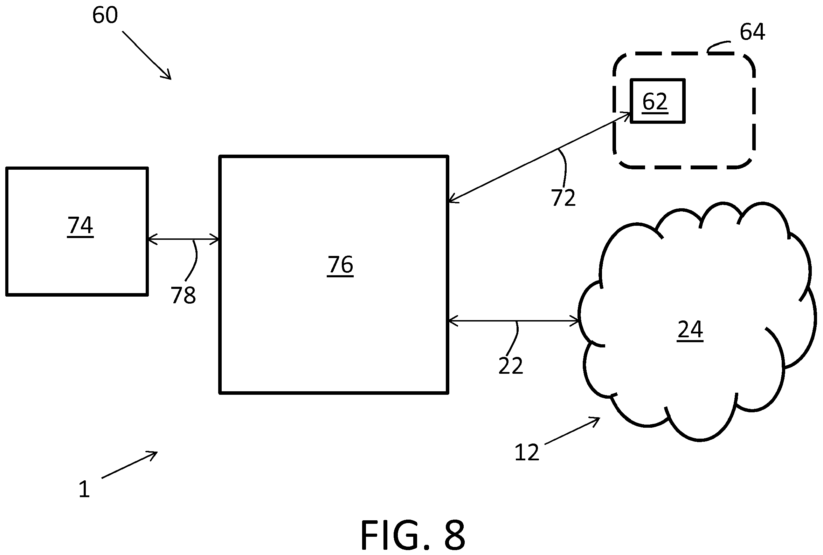

With particular reference to FIG. 6, the transfer mechanism 60 may provide a system or method to transfer tokens and hence modify 72 incentive unit value to encourage behaviors related to a product or service 64, e.g., distribution, stocking, delivery, promotion, purchase, etc., associated with the product or service 64, which may be a physical or non-physical product 64 (automobile, videogame, movie). A digital wallet 62 may be associated with a product or service 64, e.g., a code or link-to-wallet may be attached, printed, or identified on the product, product packaging, service location, etc. The wallet 62 may refer to a digital currency wallet such as a virtual, virtual currency, cryptocurrency wallet or other digital wallet that may hold coupons, gift cards, rewards, virtual currency, or other exchangeable units of value/tokens. For example, the wallet 62 may include/store private keys having an associated amount of tokens. The wallet 62 may be associated with a product or service 64 wherein the wallet 64 includes a code 66 represented by a series of signals that may include sensors, holograms, tones or sound, invisible images, etc. For example, the wallet 62 may include a holographic image, series of tones (music), sensors or a visible or invisible signal that can broadcast data transmissions and connect the wallet 62 and the system 1, such as the incentive protocol network 12, distributed ledger/block chain 24, or incentive protocol platform 10 (see FIGS. 1-5B), which may include a transfer resource 76 (see FIG. 8). The transfer mechanism 60 may be used to allow participants 74 to send/receive/modify incentives or view pricing, logistical, and historical information. The participant that receives the wallet 62 may be a purchaser or end user of the product or service 64. In some embodiments, the participant that receives the wallet 64 may be a transporter, merchant, provider, or other participant party along the distribution chain or commercial environment of the product or service 64 to incentivize the behavior of the recipient, such as shipping, transporting, storing, promoting, selling, performing, receiving, purchasing, or any other desired behavior. In one embodiment, multiple wallets 62 may be associated with a product or service 64 such that multiple participants along the distribution chain or commercial environment may be incentivized for particular desired behaviors, such as shipping, transporting, storing, promoting, selling, performing, receiving, purchasing, or any other behavior in which the participant providing the incentive desires to incentivize.

In one example, when a consumer participant purchases the product or service 64 that includes a wallet 62, the private keys and the associated amount of tokens in the wallet 62 transfer to or otherwise become property of the participant consumer. The tokens may then be associated with the consumer's account or deposited into the consumer's wallet, which may include features similar to those described with respect to wallet 20 (see FIGS. 1-5B). This mechanism 60 may be employed by a manufacturer participant 74 or other participant 74 to encourage sale of products or services 64 by incentivizing such behaviors as well as modifying 72 the associated incentive unit to increase or decrease incentives, even after the product or service is no longer in possession, e.g., control, title, or combination thereof, of the participant 74 desiring to incentivize the behavior.

Various manners of association or attachment may be used to attach the wallet 62 to a product or service. For example, the code 66, such as a QR code or any next generation code such as, for example, a snap tag, 2d mobile barcode, watermarks, invisible printed elements, graphic elements or any series of letters and numbers that offers similar information to the QR code/barcodes above to consumers, merchants or for historical/tracking data may be affixed, e.g., printed on or adhered to the product or provided at a location of the service.

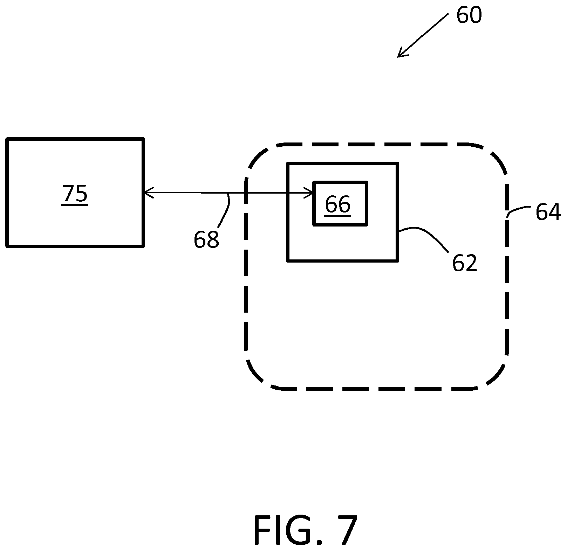

As shown in FIG. 7, in one embodiment, a participant such as a consumer may scan 68 or access the code 66 with a participant electronic device 75, e.g., by reading or scanning with an optical or audio device, scanner, or digital device such as a smart phone or local scanner provided by a merchant, to view the value of the incentive unit or token amount currently in the wallet 62 associated with the product or service 64.

As shown in FIG. 8, the transfer mechanism 60 may include a transfer resource 76 configured to modify 72 the amount of tokens or incentive value in a wallet 62 and thereby change the incentive unit associated with performance of the desired behavior. Modification 72 using the transfer resource 76 may allow a participant 74 seller, manufacturer, distributor, or other party to modify 72 the incentive unit. The transfer resource 76 may be used to allow participants 74 to send/receive incentives, pricing, logistical, and historical information. The transfer functionalities may be associated with one or more participant accounts to allow such participants 74 to directly modify 72 the amount of tokens in the wallet 62 prior to purchase or use by another participant that receives the wallet 62 as an incentivize for a behavior associated with the product or service 64, such as purchase, use, distribution, promotion, etc. For example, a participant manufacturer 74 may broadcast 22 transactions directly to the incentive protocol network 12 to modify 72 the tokens in the wallet 62 and, hence, the incentive unit.

In one embodiment, as shown in FIG. 8, transfer of tokens or modification 72 of an incentive unit may be provided through a broadcasting service associated with the transfer resource 76, which in at least one embodiment may be associated with the incentive protocol platform 10, wherein a participant 74, such as the manufacturer of a product or provider of a service, wishing to increase or decrease the incentive unit may submit a request 78, e.g., into their participant account, and the transfer resource 76 may broadcast the requested changes as a transaction to the incentive protocol network 12 to modify 72 the amount of tokens in the wallet 62. In various embodiments, the participant 74 may interface with the transfer resource 76, which may include a centralized service interfacing with a decentralized portion of the incentive protocol network 12 or distributed ledger/block chain 24, e.g., via a virtual or distributed network, which may include a gateway, switch, router, modem, network adaptor, telecommunications transceiver, software, webpage, etc. configured to interface with the participant 74 and broadcast transactions to the incentive protocol network 12. An addressable link to the wallet 62 may be provided to link to the transfer resource 76 and allow the participant 74 to dynamically increase or decrease the amount of tokens in the wallet 62. The wallet 62 may therefore be remotely addressable by the participant 74, e.g., via the transfer resource, to increase or decrease the incentive unit associated with the product or service 64 to incentivize a desired behavior.

Accordingly, in various embodiments, the participant 74 may not have physical possession or may even lack title to a product 64 but may modify the value of the product 64 or a transaction involving the product 64 by modifying 72 the incentive unit using the transfer resource 76, as described above. Thus, the amount of tokens associated with each wallet 62 that is attached or otherwise associated to each of a plurality of products or services 64 may be increased or decreased, e.g., by a participant 74, any number of times until the product or service 64 is sold to a consumer, or even, in one embodiment, afterwards, such as to incentivize maintenance, repairs, recalls, etc. For example, this system may allow participants 74 to have control over customized direct discounting or to incentivize individual products or services 64 that it has produced and that are awaiting sale. This control may allow participants 74 to dynamically transfer more or less value into products or services 64 they want to incentive consumers to buy or not buy. For example, a participant 74 that is a manufacturer, producer, or supplier of perishable products 64 may modify 72, e.g., by transferring tokens or additional tokens, into the wallet 62 of a particular perishable product 64 about to expire to encourage it's sale before it becomes unsalable.

In at least one embodiment, the incentive protocol platform 12 may be used to provide tracking or other information regarding a product or service 64. The wallet 62 may be remotely addressable to view historical data associated with the product or service 64, current or projected inventory of the product or service 64, or a value/incentive unit associated with the wallet 62. For example, the wallet 62 may be queried to access information outside the physical presence of the wallet 62 or scanned to view an expiration date of the product or service 64 or a current incentive unit. A participant 74 providing the incentive unit, for example, may access the wallet 62 to view information associated with the product, such as how many of such items are in stock. In these or other embodiments, the wallet 62 may be scanned, read, or queried to view how many times the wallet 62 has been scanned 68 with a participant electronic device 75, such as a scanning or reader device, to query information from the product or service 64. The participant electronic device 75 may scan 68 the broadcast to interface with an incentive protocol application which may be run on the participant electronic device. The incentive protocol application may interface with the incentive protocol platform 10 or incentive protocol network 12 to access the information. In one example, the wallet 62 may be accessed to view the type of device 75 that was used to scan 68 the code 66, such as Google glass, a smart phone, smart watch or other device.

Various elements of the incentive protocol system 1 may be implemented as software code to be executed by a computer processor, e.g., digital processor, of a computer system using any type of suitable computer instruction type. The software code may be stored as a series of instructions or commands on data storage medium comprising a non-transitory computer readable memory medium. Non-transitory computer-readable memory medium may include, for example, magnetic and optical memory devices such as diskettes, compact discs of both read-only and writeable varieties, optical disk drives, and hard disk drives. A non-transitory computer-readable memory medium may also include memory storage that can be physical, virtual, permanent, temporary, semi-permanent or semi-temporary. The incentive protocol system 1 may be implemented by any suitable type of hardware (e.g., device, computer, computer system, equipment, component), software (e.g., program, application, instruction set, code), storage medium (e.g., disk, device), propagated signal, or combination thereof. It is to be appreciated that elements of the incentive protocol system 1, including the various components or modules thereof, may include or use, including share, resources, hardware, processors, memory, data storage mediums, peripherals, services, networking or communication interfaces used to access the Internet, intranets or extranets via wire, Wi-Fi, or Wireless Wide Area Networks, and may or may not be present in a single physical location.

Various embodiments of the protocol 10 may be implemented utilizing any suitable computer languages (e.g., C, C++, Java, JavaScript, Visual Basic, VBScript, Delphi) and may be embodied permanently or temporarily in any type of machine, component, physical or virtual equipment, storage medium, or propagated signal capable of delivering instructions to a device. These software applications or computer programs may be stored on a computer readable medium (e.g., disk, device), such that when a computer reads the medium, the functions described herein are performed. In general, elements of embodiments may be connected through a network having wired or wireless data pathways. The network may include any type of delivery system including, but not limited to a local area network (e.g., Ethernet), a wide area network (e.g., the Internet and/or World Wide Web), a telephone network (e.g., analog, digital, wired, wireless, PSTN, ISDN, and/or xDSL), a packet-switched network, a radio network, a television network, a cable network, a satellite network, and/or any other wired or wireless communications network configured to carry data.

Aspects or portions of the incentive protocol system 1 may include open-source or decentralized aspects. In one embodiment, the distributed ledger protocol 10 includes open-source and peer-to-peer aspects in combination with centralized resources or services. Resources may include a network service or application, which may be configured to operate at one or more network layers. The network may include servers, clients, nodes, which may include client-server or peer-to-peer architectural aspects. The network may include elements, such as, for example, intermediate nodes, proxy services, routers, switches and adapters or plugins configured to direct or deliver data. In general, elements of embodiments may include hardware or software components for communicating with the network and with each other. These elements may be structured and arranged to communicate through the network using various communication protocols (e.g., HTTP, TCP/IP, UDP, WAP, WiFi Bluetooth) or to operate within or in concert with one or more other communications systems. Elements of embodiments may include one or more servers (e.g., IBM^{®} operating system servers, Linux operating system-based servers, Windows NT^{™} servers, Sybase) within the system.

Various embodiments are described and illustrated in this specification to provide an overall understanding of the composition, function, operation, and application of the disclosed compositions and methods. It is understood that the various embodiments described and illustrated in this specification are non-limiting and non-exhaustive. Thus, the invention is not necessarily limited by the description of the various non-limiting and non-exhaustive embodiments disclosed in this specification. The features and characteristics illustrated or described in connection with various embodiments may be combined with the features and characteristics of other embodiments. Such modifications and variations are intended to be included within the scope of this specification. As such, the claims may be amended to recite any features or characteristics expressly or inherently described in, or otherwise expressly or inherently supported by, this specification. Further, Applicant reserves the right to amend the claims to affirmatively disclaim features or characteristics that may be present in the prior art. Therefore, any such amendments comply with the requirements of 35 U.S.C. §§ 112(a) and 132(a). The various embodiments disclosed and described in this specification can comprise, include, consist of, or consist essentially of the features and characteristics as variously described in this specification.

The grammatical articles "one" , "a" , "an" , and "the" , as used in this specification, are intended to include "at least one" or "one or more", unless otherwise indicated. Thus, the articles are used in this specification to refer to one or more than one (i.e., to "at least one") of the grammatical objects of the article. By way of example, "a component" means one or more components, and thus, possibly, more than one component is contemplated and may be employed or used in an implementation of the described embodiments. Further, the use of a singular noun includes the plural, and the use of a plural noun includes the singular, unless the context of the usage requires otherwise. Additionally, the grammatical conjunctions "and" and "or" are used herein according to their accepted usage. By way of example, "x and y" refers to "x" and "y". On the other hand, "x or y" refers to "x", "y", or both "x" and "y", whereas "either x or y" refers to exclusivity.

## Claims

1. A system, comprising:
an incentive protocol platform (10); and
at least one participant electronic device (75) communicatively coupled to the incentive protocol platform, wherein the at least one participant electronic device (75) includes biometric feedback device functions through which biometric data is obtained from a participant and transmitted to the incentive protocol platform (10) as biometric data,
wherein the incentive protocol platform (10) further includes:
an incentive transaction communication module (26) configured to receive the biometric data from the at least one participant electronic device (75);
an incentive transaction module (32) configured to generate an incentive unit transaction based on the biometric data by using one or more incentive protocol system rules to determine a type or amount of an incentive unit that is to be distributed for non-transactional behavior of the participant associated with the biometric data; and
an incentive distribution module (44) configured to receive incentive unit transaction data from the incentive transaction module (32) and distribute the incentive unit to a wallet (20) associated with the participant, wherein the incentive distribution module (44) is further configured to broadcast the incentive unit transaction data to an incentive protocol network (12) for inclusion in a distributed ledger (24) to confirm the incentive unit transaction including the incentive unit transmitted to the wallet (20) associated with the participant;
wherein the incentive protocol platform (10) further includes a white-label service that is configured to issue white-label tokens on top of a coalition distributed ledger (24) as a stand-alone program, wherein the white-label tokens function as the incentive unit.

2. The system of claim 1, wherein the incentive unit transaction data include crypto transaction data including at least a private key or address to effectuate the incentive unit distribution.

3. The system of claim 1, wherein the incentive unit includes an amount or value of tokens for distribution to the wallet (20) associated with the participant.

4. The system of claim 3, wherein, when broadcasting the incentive unit transaction data to the incentive protocol network (12), the incentive distribution module (44) refers to a location where the incentive unit tokens are originally called from the incentive protocol network (12) or the distributed ledger (24) via a remote procedure call.

5. The system of claim 1, wherein standalone programs on the coalition distributed ledger (24) are configured to interact with each other according to parameters defined by participant program operators to allow white-label tokens associated with different participant program operators to freely exchange.

6. The system of claim 5, wherein the incentive protocol platform (10) further includes a mint modification module (90) configured to modify a minting of tokens within a block time with respect to the distributed ledger, wherein the minted tokens when modified include additional or layered incentive data.

7. The system of claim 1, wherein the mint modification module (90) is built into distributed ledger (24).

8. The system of claim 1, wherein the distributed ledger (24) includes a block chain.

9. The system of claim 1, wherein the distributed ledger (24) is associated with, but does not include, a block chain.

10. The system of claim 1, wherein the at least one participant electronic device (75) is a wearable device configured to obtain the biometric data and transmit the biometric data to the incentive protocol platform (10).

11. The system of claim 1, wherein the biometric data include at least one of:
heartbeat of the participant;
blood pressure of the participant; and
blood sugar level of the participant.

12. A method, comprising:
obtaining, by at least one participant electronic device (75), biometric data from a participant, wherein the obtained biometric data is transmitted to an incentive protocol platform (10) as biometric data;
receiving, by an incentive transaction communication module (26) of the incentive protocol platform (10), the biometric data from the at least one participant electronic device (75);
generating, by an incentive transaction module (32) of the incentive protocol platform (10), an incentive unit transaction based on the biometric data by using one or more incentive protocol system rules to determine a type or amount of an incentive unit that is to be distributed for non-transactional behavior of the participant associated with the biometric data;
receiving, by an incentive distribution module (44) of the incentive protocol platform (10), incentive unit transaction data from the incentive transaction module (32), and distributing, by an incentive distribution module (44), the incentive unit to a wallet (20) associated with the participant; and
broadcasting, by the incentive distribution module (44), the incentive unit transaction data to an incentive protocol network (12) for inclusion in a distributed ledger (24) to confirm the incentive unit transaction including the incentive unit transmitted to the wallet (20) associated with the participant; and
wherein the incentive protocol platform (10) further includes a white-label service that is configured to issue white-label tokens on top of a coalition distributed ledger (24) as a stand-alone program, wherein the white-label tokens function as the incentive unit.

13. The method of claim 12, wherein the incentive unit includes an amount or value of tokens for distribution to the wallet (20) associated with the participant; and
when broadcasting the incentive unit transaction data to the incentive protocol network (12), the incentive distribution module (44) refers to a location where the incentive unit tokens are originally called from the incentive protocol network (12) or the distributed ledger (24) via a remote procedure call.

## Patentansprüche

1. System, umfassend:
eine Anreizprotokollplattform (10); und
mindestens eine elektronische Teilnehmervorrichtung (75), die kommunikativ mit der Anreizprotokollplattform gekoppelt ist, wobei die mindestens eine teilnehmende elektronische Vorrichtung (75) biometrische Rückmeldungsvorrichtungsfunktionen beinhaltet, durch die biometrische Daten von einem Teilnehmer erlangt und als biometrische Daten an die Anreizprotokollplattform (10) übertragen werden,
wobei die Anreizprotokollplattform (10) ferner Folgendes beinhaltet:
ein Anreiztransaktions-Kommunikationsmodul (26), das dazu konfiguriert ist, die biometrischen Daten von der mindestens einen elektronischen Teilnehmervorrichtung (75) zu empfangen;
ein Anreiztransaktionsmodul (32), das dazu konfiguriert ist, eine Anreizeinheitstransaktion basierend auf den biometrischen Daten unter Verwendung einer oder mehrerer Anreizprotokollsystemregeln zu erzeugen, um einen Typ oder eine Menge einer Anreizeinheit zu bestimmen, die für nichttransaktionales Verhalten des Teilnehmers, der den biometrischen Daten zugeordnet ist, zu verteilen ist; und
ein Anreizverteilungsmodul (44), das dazu konfiguriert ist, Anreizeinheit-Transaktionsdaten von dem Anreiztransaktionsmodul (32) zu empfangen und die Anreizeinheit an eine Brieftasche (20) zu verteilen, die dem Teilnehmer zugeordnet ist, wobei das Anreizverteilungsmodul (44) ferner dazu konfiguriert ist, die Anreizeinheit-Transaktionsdaten an ein Anreizprotokollnetzwerk (12) zum Einfügen in ein verteiltes Ledger (24) auszusenden, um die Anreizeinheittransaktion zu bestätigen, einschließlich der Anreizeinheit, die an die dem Teilnehmer zugeordnete Brieftasche (20) übertragen wird;
wobei die Anreizprotokollplattform (10) ferner einen White-Label-Dienst beinhaltet, der dazu konfiguriert ist, White-Label-Token auf einem koalitionsverteilten Ledger (24) als eigenständiges Programm auszugeben, wobei die White-Label-Token als Anreizeinheit fungieren.

2. System nach Anspruch 1, wobei die Anreizeinheittransaktionsdaten Kryptotransaktionsdaten beinhalten, die mindestens einen privaten Schlüssel oder eine Adresse zum Durchführen der Verteilung der Anreizeinheiten beinhalten.

3. System nach Anspruch 1, wobei die Anreizeinheit eine Menge oder einen Wert von Token zur Verteilung an die Brieftasche (20) beinhaltet, die dem Teilnehmer zugeordnet ist.

4. System nach Anspruch 3, wobei das Anreizverteilungsmodul (44) beim Aussenden der Anreizeinheit-Transaktionsdaten an das Anreizprotokollnetzwerk (12) auf einen Standort verweist, an dem die Anreizeinheitentoken ursprünglich aus dem Anreizprotokollnetzwerk (12) oder dem verteilten Ledger (24) über einen Remoteprozeduraufruf aufgerufen wurden.

5. System nach Anspruch 1, wobei eigenständige Programme auf dem Verbund-Distributed-Ledger (24) dazu konfiguriert sind, miteinander gemäß den Parametern zu interagieren, die durch Teilnehmerprogrammbetreiber definiert wurden, um den freien Austausch von White-Label-Token zu ermöglichen, die unterschiedlichen Teilnehmerprogrammbetreibern zugeordnet sind.

6. System nach Anspruch 5, wobei die Anreizprotokollplattform (10) ferner ein Prägungsmodifikationsmodul (90) beinhaltet, das dazu konfiguriert ist, eine Prägung von Token innerhalb einer Blockzeit in Bezug auf das verteilte Hauptbuch zu modifizieren, wobei die geprägten Token, wenn sie modifiziert werden, zusätzliche oder geschichtete Anreizdaten beinhalten.

7. System nach Anspruch 1, wobei das Prägungsmodifikationsmodul (90) in das verteilte Ledger (24) integriert ist.

8. System nach Anspruch 1, wobei das verteilte Ledger (24) eine Blockkette beinhaltet.

9. System nach Anspruch 1, wobei das verteilte Ledger (24) einer Blockkette zugeordnet ist, diese jedoch nicht beinhaltet.

10. System nach Anspruch 1, wobei die mindestens eine elektronische Teilnehmervorrichtung (75) eine tragbare Vorrichtung ist, die dazu konfiguriert ist, die biometrischen Daten zu erlangen und die biometrischen Daten an die Anreizprotokollplattform (10) zu übertragen.

11. System nach Anspruch 1, wobei die biometrischen Daten mindestens eine von Folendem beinhalten:
Herzklopfen des Teilnehmers;
Blutdruck des Teilnehmers; und
Blutzuckerspiegel des Teilnehmers.

12. Verfahren, umfassend:
Erlangen von biometrischen Daten von einem Teilnehmer durch mindestens eine elektronische Teilnehmervorrichtung (75), wobei die erlangten biometrischen Daten als biometrische Daten an eine Anreizprotokollplattform (10) übertragen werden;
Empfangen der biometrischen Daten von der mindestens einen elektronischen Teilnehmervorrichtung (75) durch ein Anreiztransaktions-Kommunikationsmodul (26) der Anreizprotokollplattform (10);
Erzeugen einer Anreizeinheitentransaktion durch ein Anreiztransaktionsmodul (32) der Anreizprotokollplattform (10) basierend auf den biometrischen Daten unter Verwendung einer oder mehrerer Anreizprotokollsystemregeln, um einen Typ oder
eine Menge einer Anreizeinheit zu bestimmen, die für nichttransaktionales Verhalten des Teilnehmers, der den biometrischen Daten zugeordnet ist, zu verteilen ist;
Empfangen von Anreizeinheit-Transaktionsdaten von dem Anreiztransaktionsmodul (32) durch ein Anreizverteilungsmodul (44) der Anreizprotokollplattform (10) und Verteilen der Anreizeinheit an eine mit dem Teilnehmer verbundene Brieftasche (20) durch ein Anreizverteilungsmodul (44); und
Aussenden der Anreizeinheit-Transaktionsdaten durch das Anreizverteilungsmodul (44) an ein Anreizprotokollnetzwerk (12) zum Einfügen in ein verteiltes Ledger (24), um die Anreizeinheittransaktion zu bestätigen, einschließlich der Anreizeinheit, die an die Brieftasche (20) übertragen wurde, die dem Teilnehmer zugeordnet ist; und
wobei die Anreizprotokollplattform (10) ferner einen White-Label-Dienst beinhaltet, der dazu konfiguriert ist, White-Label-Token auf einem koalitionsverteilten Ledger (24) als eigenständiges Programm auszugeben, wobei die White-Label-Token als Anreizeinheit fungieren.

13. Verfahren nach Anspruch 12, wobei die Anreizeinheit eine Menge oder einen Wert von Token zur Verteilung an die Brieftasche (20) beinhaltet, die dem Teilnehmer zugeordnet ist; und
das Anreizverteilungsmodul (44) beim Aussenden der Anreizeinheit-Transaktionsdaten an das Anreizprotokollnetzwerk (12) auf einen Standort verweist, an dem die Anreizeinheitentoken ursprünglich aus dem Anreizprotokollnetzwerk (12) oder dem verteilten Ledger (24) über einen Remoteprozeduraufruf aufgerufen wurden.

## Revendications

1. Système, comprenant :
une plateforme de protocole d'incitation (10) ; et
au moins un dispositif électronique de participant (75) couplé en communication à la plateforme de protocole d'incitation, dans lequel l'au moins un dispositif électronique de participant (75) comporte des fonctions de dispositif de rétroaction biométrique par lesquelles des données biométriques sont obtenues auprès d'un participant et transmises à la plateforme de protocole d'incitation (10) en tant que données biométriques,
dans lequel la plate-forme de protocole d'incitation (10) comporte également :
un module de communication de transaction d'incitation (26) configuré pour recevoir les données biométriques provenant de l'au moins un dispositif électronique de participant (75) ;
un module de transaction d'incitation (32) configuré pour générer une transaction d'unité d'incitation sur la base des données biométriques en utilisant une ou plusieurs règles de système de protocole d'incitation afin de déterminer un type ou
une quantité d'une unité d'incitation à distribuer pour un comportement non transactionnel du participant associé aux données biométriques ; et
un module de distribution d'incitation (44) configuré pour recevoir des données de transaction d'unité d'incitation provenant du module de transaction d'incitation (32) et distribuer l'unité d'incitation à un portefeuille (20) associé au participant, dans lequel le module de distribution d'incitation (44) est également configuré pour diffuser les données de transaction d'unité d'incitation à un réseau de protocole d'incitation (12) pour inclusion dans un registre partagé (24) afin de confirmer la transaction d'unité d'incitation comportant l'unité d'incitation transmise au portefeuille (20) associé au participant ;
dans lequel la plate-forme de protocole d'incitation (10) comporte également un service de marque blanche qui est configuré pour émettre des jetons de marque blanche sur un registre partagé de coalition (24) en tant que programme autonome, dans lequel les jetons de marque blanche fonctionnent comme étant l'unité d'incitation.

2. Système selon la revendication 1, dans lequel les données de transaction d'unité d'incitation comportent des données de transaction cryptographique comportant au moins une clé privée ou une adresse pour effectuer la distribution d'unité d'incitation.

3. Système selon la revendication 1, dans lequel l'unité d'incitation comporte une quantité ou une valeur de jetons à distribuer au portefeuille (20) associé au participant.

4. Système selon la revendication 3, dans lequel, lors de la diffusion des données de transaction d'unité d'incitation au réseau de protocole d'incitation (12), le module de distribution d'incitation (44) fait référence à un emplacement où les jetons d'unité d'incitation sont appelés à l'origine à partir du réseau de protocole d'incitation (12) ou du registre partagé (24) via un appel de procédure à distance.

5. Système selon la revendication 1, dans lequel des programmes autonomes sur le registre partagé de coalition (24) sont configurés pour interagir les uns avec les autres selon des paramètres définis par des opérateurs de programmes de participant afin de permettre à des jetons de marque blanche associés à différents opérateurs de programmes de participant de s'échanger librement.

6. Système selon la revendication 5, dans lequel la plate-forme de protocole d'incitation (10) comporte également un module de modification de frappe (90) configuré pour modifier une frappe de jetons dans un temps de bloc par rapport au registre partagé, dans lequel les jetons frappés lorsqu'ils sont modifiés comportent des données d'incitation supplémentaires ou superposées.

7. Système selon la revendication 1, dans lequel le module de modification de frappe (90) est intégré dans un registre partagé (24).

8. Système selon la revendication 1, dans lequel le registre partagé (24) comporte une chaîne de blocs.

9. Système selon la revendication 1, dans lequel le registre partagé (24) est associé à une chaîne de blocs, mais ne comporte pas celle-ci.

10. Système selon la revendication 1, dans lequel l'au moins un dispositif électronique de participant (75) est un dispositif portable configuré pour obtenir les données biométriques et transmettre les données biométriques à la plate-forme de protocole d'incitation (10).

11. Système selon la revendication 1, dans lequel les données biométriques comportent au moins l'un :
d'un battement de cœur du participant ;
d'une pression artérielle du participant ; et
d'un taux de glycémie du participant.

12. Procédé, comprenant :
l'obtention, par au moins un dispositif électronique de participant (75), de données biométriques auprès d'un participant, dans lequel les données biométriques obtenues sont transmises à une plate-forme de protocole d'incitation (10) en tant que données biométriques ;
la réception, par un module de communication de transaction d'incitation (26) de la plateforme de protocole d'incitation (10), des données biométriques provenant de l'au moins un dispositif électronique de participant (75) ;
la génération, par un module de transaction d'incitation (32) de la plate-forme de protocole d'incitation (10), d'une transaction d'unité d'incitation sur la base des données biométriques en utilisant une ou plusieurs règles de système de protocole d'incitation pour déterminer un type ou une quantité d'une unité d'incitation à distribuer pour un comportement non transactionnel du participant associé aux données biométriques ;
la réception, par un module de distribution d'incitation (44) de la plateforme de protocole d'incitation (10), de données de transaction d'unité d'incitation provenant du module de transaction d'incitation (32), et la distribution, par un module de distribution d'incitation (44), de l'unité d'incitation à un portefeuille (20) associé au participant ; et
la diffusion, par le module de distribution d'incitation (44), de données de transaction d'unité d'incitation à un réseau de protocole d'incitation (12) pour inclusion dans un registre partagé (24) afin de confirmer la transaction d'unité d'incitation comportant l'unité d'incitation transmise au portefeuille (20) associé au participant ; et
dans lequel la plate-forme de protocole d'incitation (10) comporte également un service de marque blanche qui est configuré pour émettre des jetons de marque blanche sur un registre partagé de coalition (24) en tant que programme autonome, dans lequel les jetons de marque blanche fonctionnent comme étant l'unité d'incitation.

13. Procédé selon la revendication 12, dans lequel l'unité d'incitation comporte une quantité ou une valeur de jetons à distribuer au portefeuille (20) associé au participant ; et lors de la diffusion des données de transaction d'unité d'incitation au réseau de protocole d'incitation (12), le module de distribution d'incitation (44) fait référence à un emplacement où les jetons d'unité d'incitation sont appelés à l'origine à partir du réseau de protocole d'incitation (12) ou du registre partagé (24) via un appel de procédure à distance.
